# FASCICULE DE BREVET EUROPEEN

(11) **EP 1 893 946 B1**
(45) Date de publication et mention de la délivrance du brevet: **23.04.2014**
(21) Numéro de dépôt: 06778614.5
(22) Date de dépôt: 19.06.2006
(51) Int. Cl.: G01C 21/00, G01C 23/00, B64D 45/00

(54) **PROCEDE ET DISPOSITIF D'AFFICHAGE POUR UN AERONEF QUI SUIT UN PLAN DE VOL**
ANZEIGEVERFAHREN UND VORRICHTUNG FÜR EIN EINEM FLUGPLAN FOLGENDEN FLUGZEUG
DISPLAYING METHOD AND DEVICE FOR AN AIRCRAFT FOLLOWING A FLIGHT PLAN

(30) Priorité: 21.06.2005 FR 0506256
(43) Date de publication de la demande: 05.03.2008
(73) Titulaire: AIRBUS OPERATIONS (SAS), 31060 Toulouse (FR)
(72) Inventeur: ROUQUETTE, Patrice, F-31450 Pompertuzat (FR); LAVEANT, Nolween, F-31200 Toulouse (FR); HAVE, Didier, F-31100 Toulouse (FR); LE TELLIER, Arnaud, F-31200 Toulouse (FR)
(74) Mandataire: Hauer, Bernard
(86) Numéro de dépôt international: PCT/FR2006/001379
(87) Numéro de publication internationale: WO 2006/136687

(56) Documents cités:
- FR-A- 2 847 553
- US-A1- 2004 111 192
- US-B1- 6 255 965

## Description

La présente invention concerne un procédé et un dispositif d'affichage pour un aéronef, en particulier un avion de transport, qui suit un plan de vol.

On sait que, dans un contexte international où le trafic aérien ne cesse d'augmenter, on associe aux trajectoires des aéronefs des couloirs aériens, dont la largeur devient de plus en plus faible. Pour pouvoir réduire cette largeur de couloir aérien, on tient notamment compte de certaines performances desdits aéronefs.

On sait de plus que les performances qu'un aéronef doit tenir pour rester dans un tel couloir aérien, sont de deux types, à savoir :
- des performances de guidage : le but est de faire suivre à l'aéronef correctement un plan de vol, c'est-à-dire de minimiser une erreur de guidage (dénommée en anglais "Flight Technical Error" ou FTE) ; et
- des performances de navigation : le but est d'avoir une bonne estimation de la position effective de l'aéronef, c'est-à-dire de minimiser une erreur d'estimation de position ("Position Estimation Error" en anglais ou PEE).

Pour tenir les performances précédentes, il convient donc de minimiser la somme de ces deux erreurs FTE et PEE, à savoir une erreur totale qui est dénommée en anglais "Total System Error" ou TSE.

La tenue de ce paramètre TSE est l'une des conditions requises pour permettre en particulier :
- de faire voler l'aéronef suivant de nouveaux types d'approche, par rapport à des terrains contenant des obstacles ou présentant des restrictions d'atterrissage ;
   d'opérer des approches simultanées sur des pistes d'atterrissage proches les unes des autres ; et
   d'autoriser des minima de hauteur de décision d'atterrissage plus faibles.

Par conséquent, il est nécessaire au pilote et aux systèmes de l'aéronef d'effectuer une surveillance des performances en terme de guidage et de navigation dudit aéronef, par rapport aux performances requises. En effet, de telles informations permettent de renseigner le pilote et les systèmes sur la marge restante pour garder l'aéronef dans le couloir aérien requis.

Par ailleurs, on connaît :
- par le document US-2004/111192, un système d'alerte relatif à un plan de vol d'un aéronef. Ce système d'alerte prévoit de calculer des tolérances verticales et horizontales d'une trajectoire de vol de l'aéronef par rapport à des données du terrain, une alarme étant susceptible d'être déclenchée en fonction de ces comparaisons ; et
- par le document US-6 255 965, un dispositif d'aide au pilotage d'un aéronef, qui présente des signes caractéristiques sur un écran de visualisation dudit aéronef. Ces signes caractéristiques sont représentatifs de la pente et du cap de différentes trajectoires de vol de l'aéronef.

La présente invention concerne un procédé d'affichage pour un aéronef qui suit un plan de vol, permettant de fournir à un pilote de l'aéronef des informations lui permettant d'effectuer une surveillance simple et précise des performances de l'aéronef relatives au confinement de l'aéronef dans un couloir de vol (ou couloir aérien).

A cet effet, selon l'invention, ledit procédé d'affichage est remarquable en ce que l'on réalise, de façon automatique et répétitive, la suite d'étapes successives suivante :
a) on calcule la position effective de l'aéronef ;
b) on détermine au moins un écart maximal autorisé autour d'une position de consigne sur une trajectoire de vol issue dudit plan de vol, en fonction, d'une part, de performances de précision et d'intégrité de calcul de ladite position effective de l'aéronef et, d'autre part, d'une contrainte de zone de vol autorisée dans un couloir de vol associé audit plan de vol ; et
c) on présente, sur au moins un écran de visualisation, au moins une échelle de distance et, sur cette échelle de distance au moins :
   un premier symbole qui est fixe et qui indique ladite position effective qui est prise comme position de référence ; et
      - deux indicateurs qui indiquent les limites, généralement de part et d'autre de la trajectoire de vol, dudit écart maximal autorisé,
   lesdits indicateurs étant mobiles et situés par rapport audit premier symbole à chaque fois en conformité avec les résultats des traitements réalisés auxdites étapes a) et b).

Ainsi, grâce aux éléments (premier symbole et indicateurs) affichés sur l'écran de visualisation, le pilote est en mesure d'évaluer de façon précise la position de l'aéronef par rapport à l'écart maximal autorisé relatif à ce plan de vol.

De plus, grâce à ladite échelle de distance, ces éléments lui donnent une indication sur la distance effective. De préférence, cette échelle de distance est invariable, c'est-à-dire qu'elle présente toujours le même rapport entre la représentation figurée d'une longueur et la longueur réelle correspondante, de sorte que ces informations sont toujours présentées de façon uniforme.

De façon avantageuse, si lesdits indicateurs se déplacent par rapport audit premier symbole de sorte que ledit premier symbole n'est plus situé entre ces indicateurs, on émet un premier signal d'alerte.

Dans un mode de réalisation préféré :
- à l'étape b), on détermine, de plus, une position de consigne de l'aéronef, correspondant à une position requise par le plan de vol ; et
- à l'étape c), on présente, de plus, sur ledit écran de visualisation, un second symbole qui indique ladite position de consigne sur l'échelle de distance, ledit second symbole étant mobile et situé par rapport audit premier symbole à chaque fois en conformité avec les résultats des traitements réalisés auxdites étapes a) et b).

Ainsi, grâce à ces éléments (premier et second symboles) affichés sur l'écran de visualisation, le pilote est en mesure d'évaluer de façon précise la position de l'aéronef par rapport à la position requise par le plan de vol.

En outre, avantageusement :
- à l'étape c), on détermine, de plus, un écart auxiliaire qui illustre une performance de guidage de l'aéronef, en fonction d'un mode de pilotage activé pour piloter l'aéronef ; et
- à l'étape d), on présente, de plus, sur ledit écran de visualisation, deux marqueurs qui indiquent sur l'échelle de distance les limites, généralement de part et d'autre de la trajectoire de vol, dudit écart auxiliaire, lesdits marqueurs étant mobiles et situés par rapport audit premier symbole à chaque fois en conformité avec les résultats du traitement précédent.

Par ailleurs, de façon avantageuse :
- on compare ledit écart maximal autorisé audit écart auxiliaire ; et
- si ledit écart maximal autorisé devient inférieur audit écart auxiliaire, on émet un second signal d'alerte.

Dans une première variante, ledit écart maximal autorisé est un écart latéral maximal autorisé et ladite trajectoire de vol est une trajectoire de vol latérale.

Dans un mode de réalisation particulier, à l'étape b), on détermine comme écart latéral maximal autorisé, la plus petite des trois différences suivantes :
- une différence entre une contrainte de couloir relative au couloir de vol et une incertitude sur la position effective calculée ;
- une différence entre le double de ladite contrainte de couloir et une limite d'intégrité horizontale ; et
- une différence entre le double de ladite contrainte de couloir et une probabilité relative à une erreur de navigation transverse.

Dans une deuxième variante ou en complément de la première variante précitée, ledit écart maximal autorisé est un écart vertical maximal autorisé et ladite trajectoire de vol est une trajectoire de vol verticale.

Dans une troisième variante ou en complément de l'une ou des deux variantes précitées, ledit écart maximal autorisé est un écart longitudinal selon la trajectoire de vol.

Par ailleurs, dans un mode de réalisation particulier, à l'étape c), on présente l'une ou plusieurs des échelles de distance suivantes :
- une échelle latéralé ;
- une échelle longitudinale ; et
- une échelle verticale.

En outre, avantageusement, à l'étape c), on réalise un affichage combiné d'écarts latéral et longitudinal sur une même échelle de distance, correspondant à un écart horizontal.

La présente invention concerne également un dispositif d'affichage pour un aéronef qui suit un plan de vol.

Selon l'invention, ledit dispositif est remarquable en ce qu'il comporte :
- un premier moyen pour calculer la position effective de l'aéronef ;
- un deuxième moyen pour déterminer au moins un écart (latéral, vertical ou longitudinal) maximal autorisé autour d'une position de consigne sur une trajectoire de vol (latérale ou verticale ou selon cette dernière), issue dudit plan de vol, en fonction, d'une part, de performances de précision et d'intégrité de calcul de ladite position effective de l'aéronef et, d'autre part, d'une contrainte de zone de vol autorisée dans un couloir de vol associé audit plan de vol ;
- éventuellement un troisième moyen pour déterminer une position de consigne de l'aéronef, correspondant à une position requise par le plan de vol ; et
- un système d'affichage pour présenter, sur au moins un écran de visualisation, au moins une échelle de distance (de préférence invariable) et, sur cette échelle de distance :
   ■ un premier symbole qui est fixe et qui indique ladite position effective qui est prise comme position de référence ;
   ■ éventuellement un second symbole qui indique ladite position de consigne ; et
   ■ deux indicateurs qui indiquent les limites (de part et d'autre de la trajectoire de vol en cas d'écart latéral ou vertical) dudit écart maximal autorisé,
ledit système d'affichage étant formé de manière à déplacer ledit second symbole et lesdits indicateurs qui sont mobiles de sorte qu'ils sont situés par rapport audit premier symbole à chaque fois en conformité avec les résultats des traitements réalisés par lesdits premier, deuxième et troisième moyens.

De préférence, ledit dispositif conforme à l'invention comporte, de plus, un quatrième moyen pour déterminer un écart auxiliaire qui illustre une performance de guidage de l'aéronef en fonction d'un mode de pilotage activé, et ledit système d'affichage présente de plus sur ledit écran de visualisation, deux marqueurs qui indiquent sur l'échelle de distance les limites (de part et d'autre de la trajectoire de vol en cas d'écart latéral ou vertical) dudit écart auxiliaire, ledit système d'affichage étant formé de manière à déplacer lesdits marqueurs qui sont mobiles de sorte qu'ils sont situés par rapport audit premier symbole à chaque fois en conformité avec les résultats des traitements réalisés par ledit quatrième moyen.

En outre, dans un mode de réalisation particulier, ledit dispositif comporte, de plus :
- des moyens susceptibles d'émettre au moins un signal d'alerte ; et/ou
- une base de données comprenant des valeurs de contrainte, notamment de contrainte de couloir, relatives à un couloir de vol associé à un plan de vol.

Par ailleurs, avantageusement :
- au moins ledit deuxième moyen fait partie d'un système de gestion de vol de l'aéronef ; et/ou
- ledit écran de visualisation est un écran primaire de pilotage.

Les figures du dessin annexé feront bien comprendre comment l'invention peut être réalisée. Sur ces figures, des références identiques désignent des éléments semblables.

La figure 1 est le schéma synoptique d'un dispositif d'affichage conforme à l'invention.

Les figures 2 à 5 montrent schématiquement un affichage réalisé conformément à l'invention, à titre d'exemple sur un écran primaire de pilotage, respectivement dans des situations de vol différentes.

Les figures 6 à 8 montrent schématiquement des variantes de réalisation d'indications présentées conformément à l'invention sur un écran de visualisation.

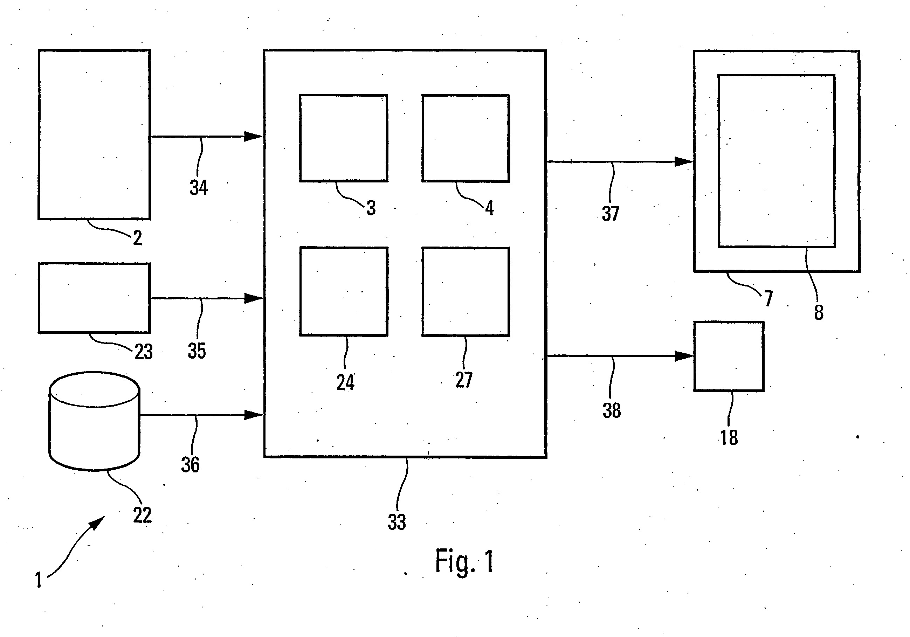

Le dispositif 1 conforme à l'invention et représenté schématiquement sur la figure 1 est destiné à afficher des informations précisées ci-après sur un aéronef A, en particulier un avion de transport, qui suit un plan de vol. Ce plan de vol est déterminé de façon usuelle soit avant le vol, soit au cours du vol, par exemple par l'intermédiaire d'un système de gestion du vol de type FMS ("Flight Management System" en anglais).

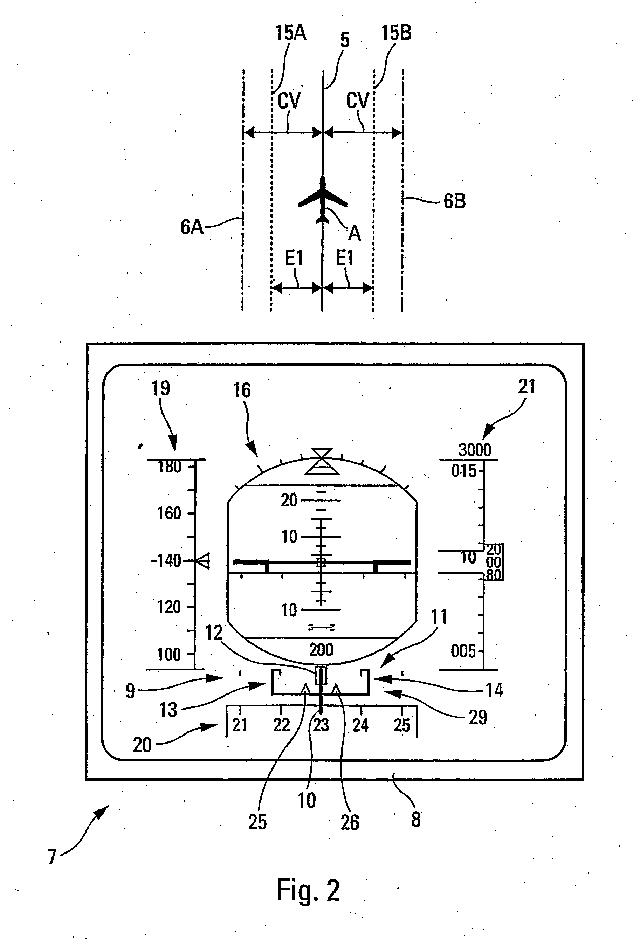

Selon l'invention, ledit dispositif 1 comporte :
- un ensemble 2 de sources d'informations comprenant notamment un moyen usuel, muni par exemple d'un capteur de type GPS ("Global Positioning System" en anglais), pour calculer la position effective de l'aéronef A ;
- un moyen 3 pour déterminer une position de consigne de l'aéronef A, correspondant à une position requise par ledit plan de vol que l'aéronef A doit suivre ;
- un moyen 4 pour déterminer en temps réel au moins un écart maximal autorisé de part et d'autre d'une trajectoire de vol qui est issue de façon usuelle dudit plan de vol. Dans le cadre de la présente invention, il peut s'agir d'un écart latéral maximal autorisé relatif à une trajectoire de vol latérale et/ou d'un écart vertical maximal autorisé relatif à une trajectoire de vol verticale et/ou d'un écart longitudinal maximal autorisé selon une trajectoire de vol. A titre d'illustration non limitative, la description suivante s'applique à un écart latéral maximal autorisé E1 de part et d'autre d'une trajectoire de vol latérale 5 qui est représentée schématiquement sur la partie supérieure des figures 2 à 5. Selon l'invention, ledit moyen 4 détermine ledit écart latéral maximal autorisé E1, en fonction :
   ■ d'une part, de performances de précision et d'intégrité de calcul de ladite position effective de-l'aéronef-A, c'est-à-dire de la confiance portée dans les mesures et les calculs réalisés pour déterminer cette position effective ; et
   ■ d'autre part, d'une contrainte de zone de vol autorisée, et plus précisément d'une contrainte de couloir CV, relative à un couloir de vol défini par des limites 6A et 6B également représentées sur la partie supérieure des figures 2 à 5. Ledit couloir de vol (ou couloir aérien) est associé audit plan de vol et est tel que l'aéronef A doit rester à l'intérieur de ce couloir de vol lorsqu'il suit ledit plan de vol ; et
- un système d'affichage 7 qui comporte au moins un écran de visualisation 8 et qui présente, sur cet écran de visualisation 8, au moins une échelle de distance 9 et, sur cette échelle de distance 9 graduée par exemple en miles nautiques :
   ■ un symbole 10, par exemple un trait disposé verticalement, qui est fixe et qui indique ladite position effective de l'aéronef A, cette position effective étant prise comme position de référence ; et
   ■ un ensemble d'indications 11 qui est mobile par rapport audit symbole 10 fixe.

Ledit ensemble d'indications 11 comporte au moins :
- un symbole 12, par exemple un rectangle ou un trait disposé verticalement, qui indique ladite position de consigne, c'est-à-dire la position requise sur la trajectoire de vol latérale, 5 par le plan de vol ; et
- deux indicateurs 13 et 14 qui indiquent les limites 15A et 15B (de part et d'autre de la trajectoire de vol latérale 5) dudit écart latéral maximal autorisé E1, comme représenté sur la figure 2.

Selon l'invention, ledit système d'affichage 7 est formé de manière à déplacer ledit ensemble d'indications 11 qui est mobile de sorte qu'il est toujours situé par rapport audit symbole 10 en conformité avec les résultats des traitements précités (réalisés en temps réel).

Ainsi, grâce aux éléments (symboles 10 et 12, et indicateurs 13 et 14) affichés sur l'écran de visualisation 8, le pilote est en mesure d'évaluer de façon précise la position de l'aéronef A, d'une part, par rapport à la position requise par le plan de vol et, d'autre part, par rapport à l'écart latéral maximal autorisé E1 relatif à ce plan de vol.

De plus, grâce à ladite échelle de distance 9, ces éléments 10, 12, 13, 14 lui donnent une indication sur les distances effectives correspondantes. De préférence, cette échelle de distance 9 est invariable, c'est-à-dire qu'elle présente toujours le même rapport entre la représentation figurée d'une longueur et la longueur réelle correspondante, de sorte que ces informations sont toujours présentées de façon uniforme en ce qui concerne la longueur.

En ce qui concerne l'affichage (en particulier pour un écart longitudinal), plusieurs possibilités sont envisageables dans le cadre de la présente invention, notamment : écart longitudinal sur une échelle de distance spécifique (en plus de deux échelles de distance latérale et verticale, toutes combinaisons pouvant être envisagées : affichage d'une seule, de deux ou des trois échelles de distance) ; affichage combiné des écarts latéral et longitudinal sur une même échelle de distance, correspondant à un écart horizontal.

Sur les figures 2 à 5, on a représenté sur la partie supérieure une situation de vol et sur la partie inférieure l'affichage réalisé conformément à l'invention pour la situation correspondante.

La figure 2 illustre un exemple où l'aéronef A se trouve sur la trajectoire de vol latérale 5. Dans ce cas, le symbole 10 indiquant la position effective de l'aéronef A et le symbole 12 indiquant la position prescrite ou position de consigne sur ladite trajectoire de vol-latérale 5 sont superposés.

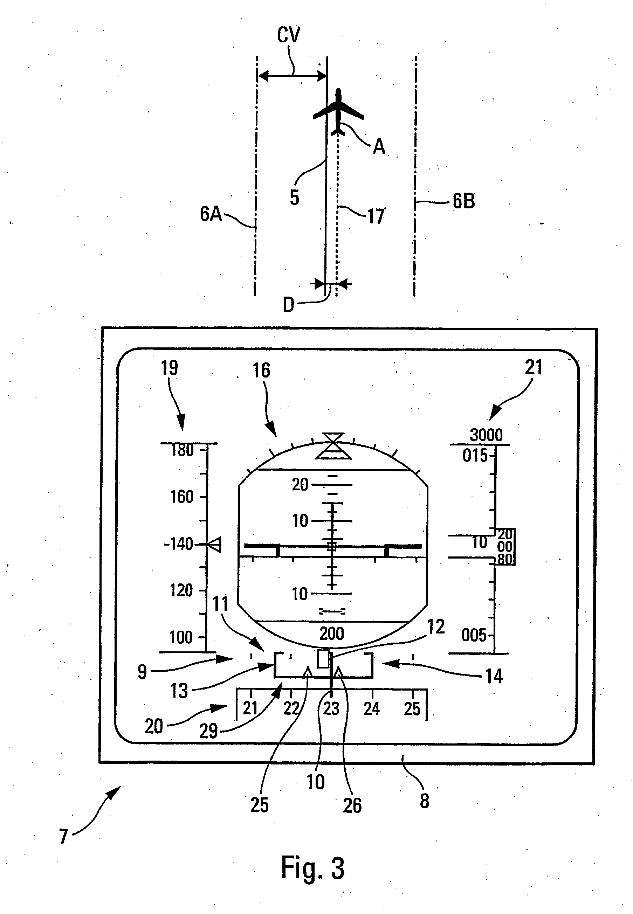

Dans l'exemple de la figure 3, la position effective de l'aéronef A (qui se trouve sur une trajectoire latérale effective 17) est décalée latéralement d'une distance D par rapport à la trajectoire latérale prescrite 5. Aussi, le symbole 12 est décalé par rapport audit symbole 10 fixe. Toute-fois, comme cette distance ou déviation latérale D est inférieure à l'écart latéral maximal autorisé E1 (non représenté), ledit symbole 10 se trouve toujours entre les indicateurs 13 et 14 qui indiquent les limites, de part et d'autre de la trajectoire de vol latérale 5, dudit écart latéral maximal autorisé E1. Le vol de l'aéronef A reste dans ce cas conforme aux prescriptions, l'aéronef A se trouvant à une distance suffisante des limites 6A et 6B du couloir de vol, ce qui le préserve de tout risque de sortie dudit couloir de vol.

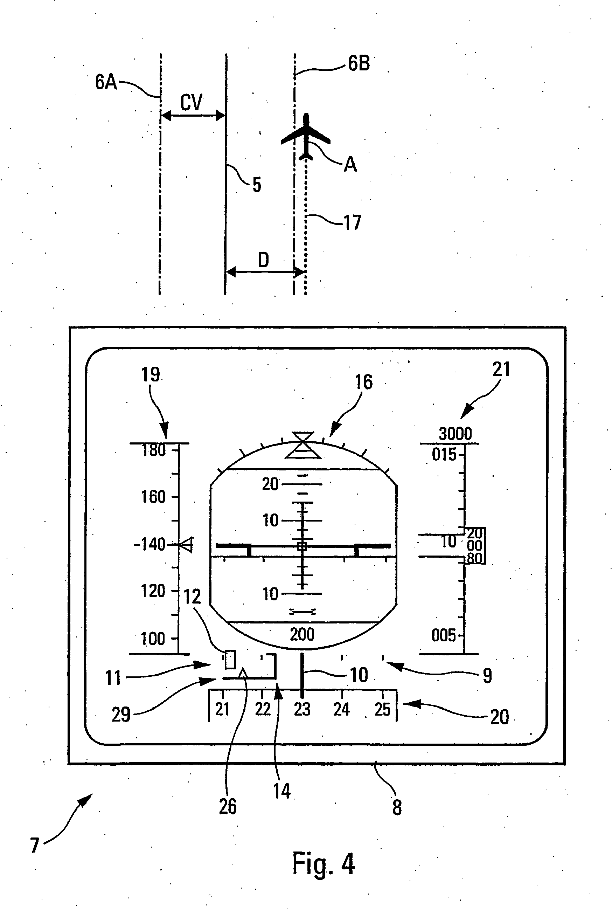

En revanche, dans l'exemple de la figure 4, la déviation latérale D est supérieure à l'écart latéral maximal autorisé E1, et l'aéronef A risque de se trouver à l'extérieur dudit couloir de vol. L'ensemble d'indications 11 est donc décalé latéralement par rapport audit symbole 10. Dans ce cas, l'aéronef A ne respecte plus la contrainte de confinement dans le couloir de vol.

Le dispositif 1 conforme à l'invention comporte des moyens d'alerte 18 pour émettre un signal d'alerte dans une telle situation. Le signal d'alerte peut correspondre à un message qui est affiché sur un écran, par exemple sur l'écran de visualisation 8 ou sur tout autre écran de l'aéronef A, tel qu'un écran de contrôle multifonctions de type MCDU ("Multipurpose Control Display Unit" en anglais) ou un écran de navigation de type ND ("Navigation Display" en anglais) par exemple. Le signal d'alerte peut également correspondre à des informations qui sont envoyées à un système d'alerte de type FWS ("Flight Warning System" en anglais).

Dans un mode de réalisation préféré, une alerte est mise en évidence sur l'écran de visualisation 8 (représenté sur les figures 2 à 5) par un clignotement de l'ensemble d'indications 11 et éventuellement du symbole 10.

Dans le mode de réalisation des figures 2 à 5, ledit écran de visualisation 8 est un écran primaire de pilotage de type PFD ("Primary Flight Display" en anglais) qui affiche de façon usuelle une zone centrale 16 comprenant un horizon artificiel qui s'incline lorsque l'aéronef A s'incline. De façon usuelle, un tel écran primaire de pilotage 8 comporte également une échelle de vitesse 19, une échelle de cap 20 et une échelle d'altitude 21.

Par ailleurs, dans un mode de réalisation particulier, ladite contrainte dé couloir CV qui dépend du plan de vol courant, est enregistrée dans une base de données 22 du dispositif 1.

En outre, dans un mode de réalisation préféré, ledit moyen 4 détermine ledit écart latéral maximal autorisé E1, comme la plus petite des trois différences suivantes qu'il calcule en temps réel :
- une différence entre ladite contrainte de couloir CV issue de ladite base de données 22 et une incertitude prédéterminée sur ladite position effective calculée ;
- une différence entre le double de ladite contrainte de couloir CV et une limite d'intégrité horizontale prédéterminée ; et
- une différence entre le double de ladite contrainte de couloir CV et une probabilité prédéterminée relative à une erreur de navigation transverse.

Par ailleurs, dans un mode de réalisation particulier, ledit dispositif 1 comporte, de plus :
- un moyen 23 usuel, pour indiquer le mode de pilotage (pilote automatique, directeur de vol) utilisé à l'instant courant par l'aéronef A, pour suivre ledit plan de vol ; et
- un moyen 24 pour déterminer un écart auxiliaire E2 qui illustre une performance de guidage de l'aéronef A, en fonction dudit mode de pilotage activé à l'instant courant pour piloter l'aéronef A, information qui est reçue dudit moyen 23.

Cet écart auxiliaire E2 peut aussi être fonction de la géométrie de la trajectoire de vol ou de conditions extérieures à l'aéronef A, telles que le vent prédit sur la trajectoire de vol.

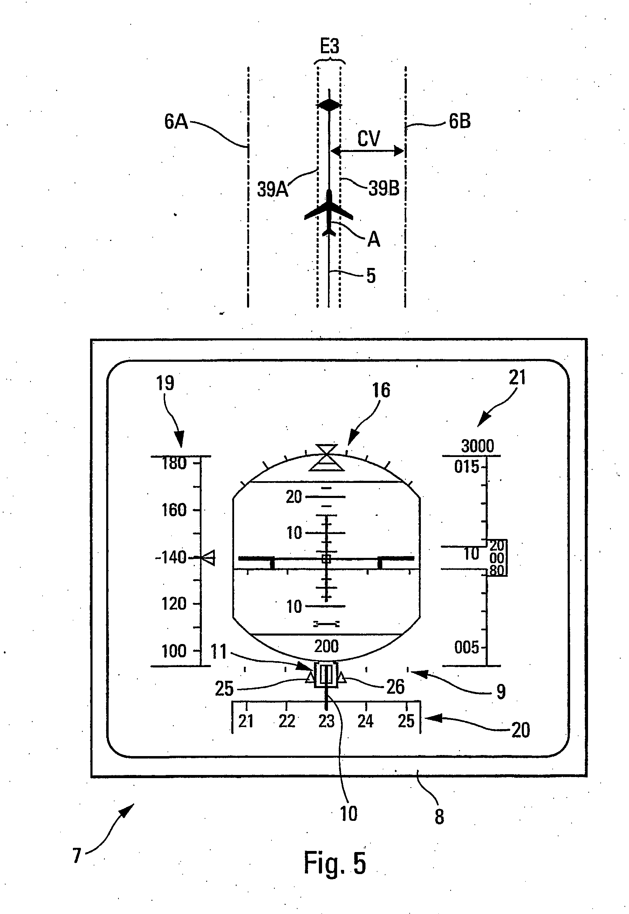

Dans ce cas, le système d'affichage 7 présente, de plus, sur ledit écran de visualisation 8, deux marqueurs 25 et 26 qui indiquent sur l'échelle de distance 9 les limites 39A et 39B (figure 5), de part et d'autre de la trajectoire de vol latérale 5, dudit écart auxiliaire E1. Lesdits marqueurs 25 et 26 font partie dudit ensemble d'indications 11 et se déplacent par rapport audit symbole 10 en conformité avec les résultats du traitement précédent. Les marqueurs 25 et 26 indiquent donc la performance intrinsèque de l'aéronef A, liée au mode de pilotage activé.

Le dispositif 1 conforme à l'invention comporte, de plus, un moyen 27 pour comparer l'écart latéral maximal autorisé E1 reçu dudit moyen 4 à l'écart auxiliaire E2 reçu dudit moyen 24. Sur la figure 5, on a représenté un écart E3 qui correspond au double de l'écart auxiliaire E2. Lorsque l'écart latéral maximal autorisé E1 devient inférieur à l'écart auxiliaire E2, ledit dispositif 1 émet un signal d'alerte correspondant. Dans ce cas, le mode de pilotage enclenché ne permet pas à l'aéronef A de rester dans le couloir de vol. Cela est dû, soit à une dégradation des performances de guidage (l'écart entre les marqueurs 25 et 26 augmentant), soit à une dégradation des performances de navigation (l'écart entre les indicateurs 13 et 14 diminuant, comme dans l'exemple de la figure 5). Dans ce cas, le signal d'alerte émis peut être du même type qu'indiqué précédemment.

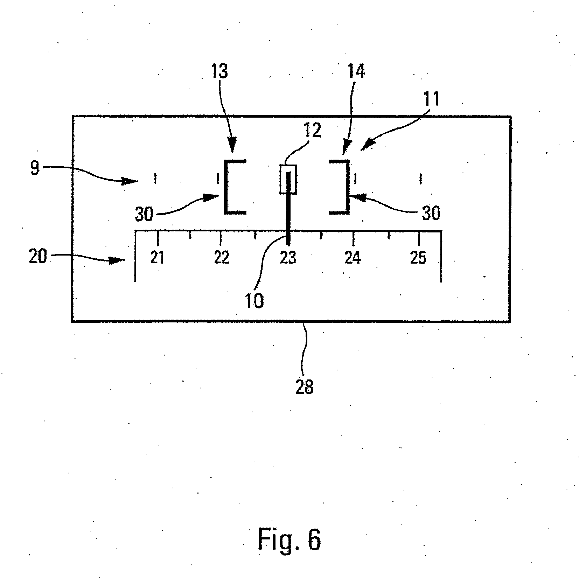

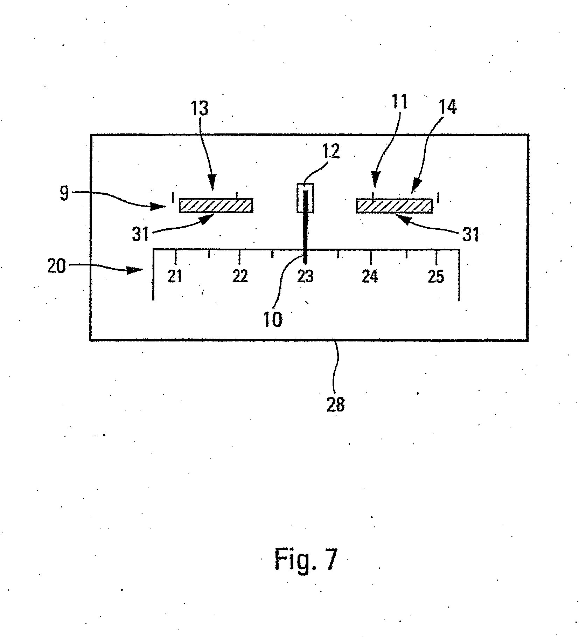

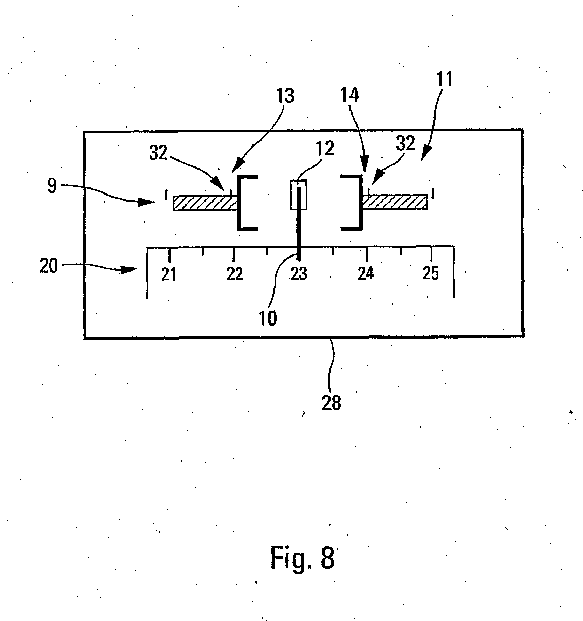

L'ensemble d'indications 11 et le symbole 10 sont affichés sur une zone d'affichage 28 de l'écran de visualisation 8. Cette zone d'affichage 28 est représentée sur les figures 6 à 8. Selon l'invention, lesdits marqueurs 13 et 14 peuvent être représentés graphiquement de différentes manières. A titre d'exemple, lesdits marqueurs 13 et 14 peuvent être représentés :
- sous forme de deux crochets reliés entre eux et formant un ensemble 29, comme illustré sur les figures 2 à 5 ;
- sous forme de crochets 30, comme illustré sur la figure 6 ;
- sous forme de surfaces 31, comme illustré sur la figure 7 ; ou
- sous forme d'ensembles 32 comportant un crochet et une surface reliés ensemble, comme illustré sur la figure 8.

Par ailleurs, dans un mode de réalisation particulier, lesdits moyens 3, 4, 24 et 27 font partie d'une unité centrale 33 qui est reliée par l'intermédiaire de liaisons 34 à 38 respectivement à l'ensemble 2, au moyen 23, à la base de données 22, au système d'affichage 7 et au moyen d'alerte 18, comme représenté sur la figure 1. Ladite unité centrale 33 correspond, par exemple, à un système de gestion de vol de type FMS ("Flight Management System" en anglais).

## Revendications

1. Procédé d'affichage pour un aéronef qui suit un plan de vol, dans lequel on réalise, de façon automatique et répétitive, la suite d'étapes successives suivante :
a) on calcule la position effective de l'aéronef (A) ;
b) on détermine au moins un écart maximal autorisé (E1) autour d'une position de consigne sur une trajectoire de vol (5) issue dudit plan de vol, en fonction, d'une part, de performances de précision et d'intégrité de calcul de ladite position effective de l'aéronef (A) et, d'autre part, d'une contrainte de zone de vol autorisée dans un couloir de vol (6A, 6B) associé audit plan de vol ; et
c) on présente, sur au moins un écran de visualisation (8), au moins une échelle de distance (9) et, sur cette échelle de distance (9) au moins :
- un premier symbole (10) qui est fixe et qui indique ladite position effective qui est prise comme position de référence ; et
- deux indicateurs (13, 14) qui indiquent les limites (15A, 15B) dudit écart maximal autorisé (E1),
lesdits indicateurs (13, 14) étant mobiles et situés par rapport audit premier symbole (10) à chaque fois en conformité avec les résultats des traitements réalisés auxdites étapes a) et b).

2. Procédé selon la revendication 1,
dans lequel, si lesdits indicateurs (13, 14) se déplacent par rapport audit premier symbole (10) de sorte que ledit premier symbole (10) n'est plus situé entre ces indicateurs (13, 14), on émet un premier signal d'alerte.

3. Procédé selon l'une des revendications 1 et 2, dans lequel
- à l'étape b), on détermine, de plus, une position de consigne de l'aéronef (A), correspondant à une position requise par le plan de vol ; et
- à l'étape c), on présente, de plus, sur ledit écran de visualisation (8), un second symbole (12) qui indique ladite position de consigne sur l'échelle de distance (9), ledit second symbole (12) étant mobile et situé par rapport audit premier symbole (10) à chaque fois en conformité avec les résultats des traitements réalisés auxdites étapes a) et b).

4. Procédé selon l'une des revendications 1 à 3, dans lequel
- à l'étape b), on détermine, de plus, un écart auxiliaire qui illustre une performance de guidage de l'aéronef (A), en fonction d'un mode de pilotage activé pour piloter l'aéronef (A) ; et
- à l'étape c), on présente, de plus, sur ledit écran de visualisation (8), deux marqueurs (25, 26) qui indiquent sur l'échelle de distance (9) les limites (39A, 39B) dudit écart auxiliaire, lesdits marqueurs (25, 26) étant mobiles et situés par rapport audit premier symbole (10) à chaque fois en conformité avec les résultats du traitement précédent.

5. Procédé selon la revendication 4, dans lequel
- on compare ledit écart maximal autorisé (E1) audit écart auxiliaire ; et
- si ledit écart maximal autorisé (E1) devient inférieur audit écart auxiliaire, on émet un second signal d'alerte.

6. Procédé selon l'une quelconque des revendications précédentes, dans lequel ledit écart maximal autorisé est un écart latéral maximal autorisé (E1) et ladite trajectoire de vol est une trajectoire de vol latérale (5).

7. Procédé selon la revendication 6,
dans lequel, à l'étape b), on détermine comme écart latéral maximal autorisé (E1), la plus petite des trois différences suivantes :
- une différence entre une contrainte de couloir (CV) relative au couloir de vol (6A, 6B) et une incertitude sur la position effective calculée ;
- une différence entre le double de ladite contrainte de couloir (CV) et une limite d'intégrité horizontale ; et
- une différence entre le double de ladite contrainte de couloir (CV) et une probabilité relative à une erreur de navigation transverse.

8. Procédé selon l'une quelconque des revendications précédentes,
dans lequel ledit écart maximal autorisé est un écart vertical maximal autorisé et ladite trajectoire de vol est une trajectoire de vol verticale.

9. Procédé selon l'une quelconque des revendications précédentes, dans lequel ledit écart maximal autorisé est un écart longitudinal selon la trajectoire de vol.

10. Procédé selon l'une quelconque des revendications précédentes,
dans lequel ladite échelle de distance (9) est invariable.

11. Procédé selon l'une quelconque des revendications précédentes,
dans lequel, à l'étape c), on présente l'une ou plusieurs des échelles de distance (9) suivantes :
- une échelle latérale ;
- une échelle longitudinale ; et
- une échelle verticale.

12. Procédé selon l'une quelconque des revendications 1 à 10, dans lequel, à l'étape c), on réalise un affichage combiné d'écarts latéral et longitudinal sur une même échelle de distance (9), correspondant à un écart horizontal.

13. Dispositif d'affichage pour un aéronef qui suit un plan de vol, comportant
- un premier moyen (2) pour calculer la position effective de l'aéronef (A) ;
- un deuxième moyen (4) pour déterminer au moins un écart maximal autorisé (E1) autour d'une position de consigne sur une trajectoire de vol (5) issue dudit plan de vol, en fonction, d'une part, de performances de précision et d'intégrité de calcul de ladite position effective de l'aéronef (A) et, d'autre part, d'une contrainte de zone de vol autorisée dans un couloir de vol (6A, 6B) associé audit plan de vol ; et
- un système d'affichage (7) pour présenter, sur au moins un écran de visualisation (8), au moins une échelle de distance (9) et, sur cette échelle de distance (9) :
■ un premier symbole (10) qui est fixe et qui indique ladite position effective qui est prise comme position de référence ; et
■ deux indicateurs (13, 14) qui indiquent les limites (15A, 15B) dudit écart maximal autorisé (E1),
ledit système d'affichage (7) étant formé de manière à déplacer lesdits indicateurs (13, 14) qui sont mobiles de sorte qu'ils sont situés par rapport audit premier symbole (10) à chaque fois en conformité avec les résultats des traitements réalisés par lesdits premier et deuxième moyens (2, 4).

14. Dispositif selon la revendication 13,
comportant de plus, un troisième moyen (3) pour déterminer une position de consigne de l'aéronef (A), correspondant à une position requise par le plan de vol, et en ce que ledit système d'affichage (7) présente, de plus, sur ledit écran de visualisation (8) un second symbole (12) qui indique ladite position de consigne sur l'échelle de distance (9), ledit système d'affichage (7) étant formé de manière à déplacer ledit second symbole (12) qui est mobile de sorte qu'il est situé par rapport audit premier symbole (10) à chaque fois en conformité avec les résultats des traitements réalisés par lesdits premier et troisième moyens (2, 3).

15. Dispositif selon l'une des revendications 13 et 14, comportant de plus, un quatrième moyen (24) pour déterminer un écart auxiliaire qui illustre une performance de guidage de l'aéronef en fonction d'un mode de pilotage activé, et en ce que ledit système d'affichage (7) présente de plus sur ledit écran de visualisation (8), deux marqueurs (25, 26) qui indiquent sur l'échelle de distance (9) les limites (39A, 39B) dudit écart auxiliaire, ledit système d'affichage (7) étant formé de manière à déplacer lesdits marqueurs (25, 26) qui sont mobiles de sorte qu'ils sont situés par rapport audit premier symbole (10) à chaque fois en conformité avec les résultats des traitements réalisés par ledit quatrième moyen (24).

16. Dispositif selon l'une quelconque des revendications 13 à 15, comportant de plus, des moyens (18) susceptibles d'émettre au moins un signal d'alerte.

17. Dispositif selon l'une quelconque des revendications 13 à 16, comportant de plus, une base de données (23) comprenant des valeurs de contrainte (CV), relatives à un couloir de vol (6A, 6B) associé à un plan de vol.

18. Dispositif selon l'une quelconque des revendications 13 à 17, dans lequel au moins ledit deuxième moyen (4) fait partie d'un système de gestion de vol de l'aéronef (A).

19. Dispositif selon l'une quelconque des revendications 13 à 18, dans lequel ledit écran de visualisation (8) est un écran primaire de pilotage.

20. Aéronef, comportant un dispositif (1) susceptible de mettre en oeuvre le procédé spécifié sous l'une quelconque des revendications 1 à 12.

21. Aéronef, comportant un dispositif (1) tel que celui spécifié sous l'une quelconque des revendications 13 à 19.

## Patentansprüche

1. Anzeigeverfahren für ein einem Flugplan folgenden Flugzeug, in dem die folgende Abfolge von aufeinanderfolgenden Schritten automatisch und sich wiederholend verwirklicht wird:
a) berechnet wird die tatsächliche Position des Flugzeugs (A);
b) ermittelt wird mindestens eine zulässige maximale Distanz (E1) um eine zugewiesene Position auf einer Flugbahn (5), die aus dem Flugplan hervorgeht, in Abhängigkeit einerseits von der Leistung in Bezug auf Berechnungsgenauigkeit und - integrität der tatsächlichen Position des Flugzeugs (A), und andererseits von einer Einschränkung der Flugzone, die in einem dem Flugplan zugeordneten Flugkorridor (6A, 6B) zulässig ist; und
c) dargestellt wird auf mindestens einem Anzeigebildschirm (8) mindestens eine Entfernungsskala (9) und auf dieser Entfernungsskala (9) mindestens:
- ein erstes Symbol (10), das feststehend ist und das die tatsächliche Position angibt, die als Referenzposition angenommen wird; und
- zwei Anzeiger (13, 14), die die Grenzen (15A, 15B) der zulässigen maximalen Distanz (E1) angeben,
wobei die Anzeiger (13, 14) beweglich sind und in Bezug auf das erste Symbol (10) jedes Mal mit den Ergebnissen der Verarbeitungen übereinstimmend positioniert werden, die in den Schritten a) und b) verwirklicht wurden.

2. Verfahren nach Anspruch 1, in dem, wenn die Anzeiger (13, 14) sich in Bezug auf das erste Symbol (10) so verschieben, dass sich das erste Symbol (10) nicht mehr zwischen diesen Anzeigern (13, 14) befindet, ein erstes Warnsignal ausgegeben wird.

3. Verfahren nach einem der Ansprüche 1 und 2, in dem
- im Schritt b) ferner eine dem Flugzeug (A) zugewiesene Position ermittelt wird, die einer durch den Flugplan geforderten Position entspricht; und
- im Schritt c) ferner auf dem Anzeigebildschirm (8) ein zweites Symbol (12) dargestellt wird, das die zugewiesene Position auf der Entfernungsskala (9) angibt, wobei das zweite Symbol (12) beweglich ist und in Bezug auf das erste Symbol (10) jedes Mal mit den Ergebnissen der Verarbeitungen übereinstimmend positioniert wird, die in den Schritten a) und b) verwirklicht wurden.

4. Verfahren nach einem der Ansprüche 1 bis 3, in dem
- im Schritt b) ferner eine Hilfsdistanz, die eine Führungsleistung des Flugzeugs (A) veranschaulicht, in Abhängigkeit von einem Steuermodus ermittelt wird, der zum Steuern des Flugzeugs (A) aktiviert wird, und
- im Schritt c) ferner auf dem Anzeigebildschirm (8) zwei Marker (25, 26) dargestellt werden, die auf der Entfernungsskala (9) die Grenzen (39A, 39B) der Hilfsdistanz angeben, wobei die Marker (25, 26) beweglich sind und in Bezug auf das erste Symbol (10) jedes Mal mit den Ergebnissen der vorhergehenden Verarbeitungen übereinstimmend positioniert werden.

5. Verfahren nach Anspruch 4, in dem
- die zulässige maximale Distanz (E1) mit der Hilfsdistanz verglichen wird; und
- ein zweites Alarmsignal ausgegeben wird, wenn die zulässige maximale Distanz (E1) kleiner wird als die Hilfsdistanz.

6. Verfahren nach irgendeinem der vorhergehenden Ansprüche, in dem die zulässige maximale Distanz eine zulässige maximale seitliche Distanz (E1) ist und die Flugbahn eine seitliche Flugbahn (5) ist.

7. Verfahren nach Anspruch 6, in dem im Schritt b) als zulässige maximale seitliche Distanz (E1) die kleinste der drei folgenden Differenzen ermittelt wird:
- eine Differenz zwischen einer Korridoreinschränkung (CV) in Bezug auf den Flugkorridor (6A, 6B) und einer Unsicherheit hinsichtlich der berechneten tatsächlichen Position;
- eine Differenz zwischen dem Doppelten der Korridoreinschränkung (CV) und einer horizontalen Integritätsgrenze; und
- eine Differenz zwischen dem Doppelten der Korridoreinschränkung (CV) und einer Wahrscheinlichkeit in Bezug auf einen Transversalnavigationsfehler.

8. Verfahren nach irgendeinem der vorhergehenden Ansprüche, in dem die zulässige maximale Distanz eine zulässige maximale vertikale Distanz ist und die Flugbahn eine vertikale Flugbahn ist.

9. Verfahren nach irgendeinem der vorhergehenden Ansprüche, in dem die zulässige maximale Distanz eine Längendistanz gemäß der Flugbahn ist.

10. Verfahren nach irgendeinem der vorhergehenden Ansprüche, in dem die Entfernungsskala (9) unveränderlich ist.

11. Verfahren nach irgendeinem der vorhergehenden Ansprüche, in dem im Schritt c) eine oder mehrere der folgenden Entfernungsskalen (9) dargestellt werden:
- eine seitliche Skala;
- eine Längenskala; und
- eine vertikale Skala.

12. Verfahren nach irgendeinem der Ansprüche 1 bis 10, in dem im Schritt c) eine Anzeige verwirklicht wird, die aus der seitlichen und der Längendistanz auf derselben Entfernungsskala (9) kombiniert wird, die einer horizontalen Distanz entspricht.

13. Anzeigevorrichtung für ein einem Flugplan folgenden Flugzeug, aufweisend:
- ein erstes Mittel (2) zum Berechnen der tatsächlichen Position des Flugzeugs (A);
- ein zweites Mittel (4) zum Ermitteln von mindestens einer zulässigen maximalen Distanz (E1) um eine zugewiesene Position auf einer Flugbahn (5), die aus dem Flugplan hervorgeht, in Abhängigkeit einerseits von der Leistung in Bezug auf Berechnungsgenauigkeit und -integrität der tatsächlichen Position des Flugzeugs (A) und andererseits von einer Einschränkung der Flugzone, die in einem Flugkorridor (6A, 6B), der dem Flugplan zugeordnet ist, zulässig ist; und
- ein Anzeigesystem (7), um auf mindestens einem Anzeigebildschirm (8) mindestens eine Entfernungsskala (9) und auf dieser Entfernungsskala (9) darzustellen:
• ein erstes Symbol (10), das feststehend ist und das die tatsächliche Position angibt, die als Referenzposition angenommen wird; und
• zwei Anzeiger (13, 14), die die Grenzen (15A, 15B) der zulässigen maximalen Distanz (E1) angeben,
wobei das Anzeigesystem (7) so ausgebildet ist, dass die Anzeiger (13, 14), die beweglich sind, so verschoben werden, dass sie in Bezug auf das erste Symbol (10) jedes Mal mit den Ergebnissen der Verarbeitungen übereinstimmend positioniert werden, die durch das erste und zweite Mittel (2, 4) verwirklicht wurden.

14. Vorrichtung nach Anspruch 13, des Weiteren aufweisend ein drittes Mittel (3) zum Ermitteln einer zugewiesenen Position des Flugzeugs (A), die einer durch den Flugplan geforderten Position entspricht, und **dadurch gekennzeichnet, dass** das Anzeigesystem (7) außerdem auf dem Anzeigebildschirm (8) ein zweites Symbol (12) darstellt, das die zugewiesene Position auf der Entfernungsskala (9) anzeigt, wobei das Anzeigesystem (7) so ausgebildet ist, dass es das zweite Symbol (12), das beweglich ist, so verschiebt, dass es in Bezug auf das erste Symbol (10) jedes Mal mit den Ergebnissen der Verarbeitungen übereinstimmend positioniert wird, die durch das erste und dritte Mittel (2, 3) verwirklicht wurden.

15. Vorrichtung nach einem der Ansprüche 13 und 14, des Weiteren aufweisend ein viertes Mittel (24) zum Ermitteln einer Hilfsdistanz, die eine Führungsleistung des Flugzeugs in Abhängigkeit von einem aktivierten Steuermodus veranschaulicht, und **dadurch gekennzeichnet, dass** ferner auf dem Anzeigebildschirm (8) zwei Marker (25, 26) dargestellt werden, die auf der Entfernungsskala (9) die Grenzen (39A, 39B) der Hilfsdistanz angeben, wobei das Anzeigesystem (7) so ausgebildet ist, dass es die Marker (25, 26), die beweglich sind, so verschiebt, dass sie in Bezug auf das erste Symbol (10) jedes Mal mit den Ergebnissen der vorhergehenden Verarbeitungen übereinstimmend positioniert werden, die durch das vierte Mittel (24) verwirklicht werden.

16. Vorrichtung nach irgendeinem der Ansprüche 13 bis 15, ferner aufweisend Mittel (18), die mindestens ein Warnsignal ausgeben können.

17. Vorrichtung nach irgendeinem der Ansprüche 13 bis 16, ferner aufweisend eine Datenbank (23), die Einschränkungswerte (CV) aufweist, die sich auf einen Flugkorridor (6A, 6B) beziehen, der einem Flugplan zugeordnet ist.

18. Vorrichtung nach irgendeinem der Ansprüche 13 bis 17, in der mindestens das zweite Mittel (4) Bestandteil eines Flugverwaltungssystems des Flugzeugs (A) ist.

19. Vorrichtung nach irgendeinem der Ansprüche 13 bis 18, in der der Anzeigebildschirm (8) ein primärer Steuerbildschirm ist.

20. Flugzeug, aufweisend eine Vorrichtung (1), die das angegebene Verfahren nach irgendeinem der Ansprüche 1 bis 12 umsetzen kann.

21. Flugzeug, aufweisend eine Vorrichtung (1) wie diejenige, die in irgendeinem der Ansprüche 13 bis 19 angegeben ist.

## Claims

1. A display method for an aircraft which follows a flight plan,
according to which the following series of successive steps is carried out in an automatic and repetitive manner:
a) the actual position of the aircraft (A) is calculated;
b) at least one maximum permitted deviation (E1) about a setpoint position on a flight trajectory (5) arising from said flight plan is determined as a function, on the one hand, of performance regarding accuracy and integrity of calculating said actual position of the aircraft (A) and, on the other hand, of a constraint regarding flight zone permitted in a flight corridor (6A, 6B) associated with said flight plan; and
c) at least one distance scale (9) and, on this distance scale (9), at least the following are presented on at least one viewing screen (8):
- a first symbol (10) which is fixed and which indicates said actual position which is taken as reference position; and
- two indicators (13, 14) which indicate the limits (15A, 15B) of said maximum permitted deviation (E1), said indicators (13, 14) being mobile and situated with respect to said first symbol (10) each time in conformity with the results of the processings carried out in said steps a) and b).

2. The method as claimed in claim 1,
according to which, if said indicators (13, 14) move with respect to said first symbol (10) so that said first symbol (10) is no longer situated between these indicators (13, 14), a first alert signal is emitted.

3. The method as claimed in one of claims 1 and 2, according to which:
- in step b), a setpoint position of the aircraft (A), corresponding to a position required by the flight plan is moreover determined; and
- in step c), a second symbol (12) which indicates said setpoint position on the distance scale (9) is presented, moreover, on said viewing screen (8), said second symbol (12) being mobile and situated with respect to said first symbol (10) each time in conformity with the results of the processings carried out in said steps a) and b).

4. The method as claimed in one of claims 1 to 3, according to which:
- in step b), an auxiliary deviation is moreover determined which illustrates a guidance performance of the aircraft (A), as a function of a piloting mode activated to pilot the aircraft (A); and
- in step c), two markers (25, 26) which indicate on the distance scale (9) the limits (39A, 39B) of said auxiliary deviation are presented, moreover, on said viewing screen (8), said markers (25, 26) being mobile and situated with respect to said first symbol (10) each time in conformity with the results of the previous processing.

5. The method as claimed in claim 4,
according to which:
- said maximum permitted deviation (E1) is compared with said auxiliary deviation; and
- if said maximum permitted deviation (E1) becomes less than said auxiliary deviation, a second alert signal is emitted.

6. The method as claimed in any one of the preceding claims,
according to which said maximum permitted deviation is a maximum permitted lateral deviation (E1) and said flight trajectory is a lateral flight trajectory (5).

7. The method as claimed in claim 6,
according to which in step b), the smallest of the following three differences is determined as maximum permitted lateral deviation (E2):
- a difference between a corridor constraint (CV) relating to the flight corridor (6A, 6B) and an uncertainty in the calculated actual position;
- a difference between twice said corridor constraint (CV) and a horizontal integrity limit; and
- a difference between twice said corridor constraint (CV) and a probability relating to a transverse navigation error.

8. The method as claimed in any one of the preceding claims,
according to which said maximum permitted deviation is a maximum permitted vertical deviation and said flight trajectory is a vertical flight trajectory.

9. The method as claimed in any one of the preceding claims,
according to which said maximum permitted deviation is a longitudinal deviation according to the flight trajectory.

10. The method as claimed in any one of the preceding claims,
according to which said distance scale (9) is invariable.

11. The method as claimed in any one of the preceding claims,
according to which in step c), one or more of the following distance scales (9) is or are presented:
- a lateral scale;
- a longitudinal scale; and
- a vertical scale.

12. The method as claimed in any one of claims 1 to 10,
according to which in step c), a combined display of lateral and longitudinal deviations is carried out on one and the same distance scale (9), corresponding to a horizontal deviation.

13. A display device for an aircraft which follows a flight plan,
comprising:
- a first means (2) for calculating the actual position of the aircraft (A);
- a second means (4) for determining at least one maximum permitted deviation (E1) about a setpoint position on a flight trajectory (5) arising from said flight plan, as a function, on the one hand, of performance regarding accuracy and integrity of calculating said actual position of the aircraft (A) and, on the other hand, of a constraint regarding flight zone permitted in a flight corridor (6A, 6B) associated with said flight plan; and
- a display system (7) for presenting, on at least one viewing screen (8), at least one distance scale (9) and, on this distance scale (9) :
• a first symbol (10) which is fixed and which indicates said actual position which is taken as reference position; and
• two indicators (13, 14) which indicate the limits (15A, 15B) of said maximum permitted deviation (E1),
said display system (7) being formed so as to move said indicators (13, 14) which are mobile so that they are situated with respect to said first symbol (10) each time in conformity with the results of the processings carried out by said first and second means (2, 4).

14. The device as claimed in claim 13,
comprising, moreover, a third means (3) for determining a setpoint position of the aircraft (A), corresponding to a position required by the flight plan, and in that said display system (7) presents, moreover, on said viewing screen (8) a second symbol (12) which indicates said setpoint position on the distance scale (9), said display system (7) being formed so as to move said second symbol (12) which is mobile so that it is situated with respect to said first symbol (10) each time in conformity with the results of the processings carried out by said first and third means (2, 3).

15. The device as claimed in one of claims 13 and 14, comprising, moreover, a fourth means (24) for determining an auxiliary deviation which illustrates a guidance performance of the aircraft as a function of an activated piloting mode, and in that said display system (7) presents moreover on said viewing screen (8), two markers (25, 26) which indicate on the distance scale (9) the limits (39A, 39B) of said auxiliary deviation, said display system (7) being formed so as to move said markers (25, 26) which are mobile so that they are situated with respect to said first symbol (10) each time in conformity with the results of the processings carried out by said fourth means (24).

16. The device as claimed in any one of claims 13 to 15,
comprising, moreover, means (18) capable of emitting at least one alert signal.

17. The device as claimed in any one of claims 13 to 16,
comprising, moreover, a database (23) comprising constraint values (CV), relating to a flight corridor (6A, 6B) associated with a flight plan.

18. The device as claimed in any one of claims 13 to 17,
according to which at least said second means (4) forms part of a flight management system of the aircraft (A).

19. The device as claimed in any one of claims 13 to 18,
according to which said viewing screen (8) is a primary piloting screen.

20. An aircraft,
comprising a device (1) capable of implementing the method specified under any one of Claims 1 to 12.

21. An aircraft,
comprising a device (1) such as that specified under any one of Claims 13 to 19.
